(19) Europäisches Patentamt
European Patent Office
Office européen des brevets

(11) **EP 1 852 980 B1**

(12) **FASCICULE DE BREVET EUROPEEN**

(45) Date de publication et mention
de la délivrance du brevet:
**18.02.2009 Bulletin 2009/08**

(51) Int Cl.:
**H04B 1/69** (2006.01)    **H04L 25/49** (2006.01)

(21) Numéro de dépôt: **07107330.8**

(22) Date de dépôt: **02.05.2007**

(54) **Système de communication UWB coopératif de type non-cohérent**

Kooperatives, inkohärentes UWB-Kommunikationssystem

Non-coherent cooperative UWB communication system

(84) Etats contractants désignés:
**DE ES FI GB SE**

(30) Priorité: **02.05.2006 FR 0651553**

(43) Date de publication de la demande:
**07.11.2007 Bulletin 2007/45**

(73) Titulaire: **COMMISSARIAT A L'ENERGIE ATOMIQUE**
**75015 Paris (FR)**

(72) Inventeur: **Abou Rjeily, Chadi**
**38406 Saint-Martin-D'Heres (FR)**

(74) Mandataire: **Augarde, Eric**
**Brevalex**
**56 Boulevard de l'Embouchure,**
**Bât. B**
**B.P. 27519**
**31075 Toulouse Cedex 2 (FR)**

(56) Documents cités:
**US-A1- 2004 157 550**

• CHIHONG CHO ET AL: "A UWB repeater with a short relaying-delay for range extension" WIRELESS COMMUNICATIONS AND NETWORKING CONFERENCE, 2004. WCNC. 2004 IEEE ATLANTA, GA, USA 21-25 MARCH 2004, PISCATAWAY, NJ, USA,IEEE, vol. 2, 21 mars 2004 (2004-03-21), pages 1154-1158, XP010708442 ISBN: 0-7803-8344-3

• DEQIANG CHEN ET AL: "Noncoherent demodulation for cooperative diversity in wireless systems" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, 29 novembre 2004 (2004-11-29), pages 31-35, XP010757488 ISBN: 0-7803-8794-5

**EP 1 852 980 B1**

**Description**

**DOMAINE TECHNIQUE**

La présente invention concerne à la fois le domaine des télécommunications en ultra-large bande ou UWB *(Ultra Wide Band)* et celui des systèmes de télécommunication coopératifs.

**ÉTAT DE LA TECHNIQUE ANTÉRIEURE**

Les systèmes de télécommunication UWB ont fait l'objet de recherches considérables ces dernières années. Ces systèmes ont pour spécificité de travailler directement en bande de base sur des signaux dits ultra-large bande. On entend généralement par signal UWB un signal conforme au masque spectral stipulé dans la réglementation du FCC du 14 Février 2002, révisée en Mars 2005, c'est-à-dire, pour l'essentiel, un signal dans la bande spectrale 3.1 à 10.6 GHz présentant une largeur de bande d'au moins 500MHz à -10dB.

Les signaux UWB se divisent en deux catégories: les signaux multi-bande OFDM (MB-OFDM) et les signaux UWB de type impulsionnel. Un signal UWB impulsionnel est constitué d'impulsions très courtes, de l'ordre de quelques centaines de picosecondes à une nanoseconde. Par la suite, la description sera limitée aux systèmes UWB impulsionnels.

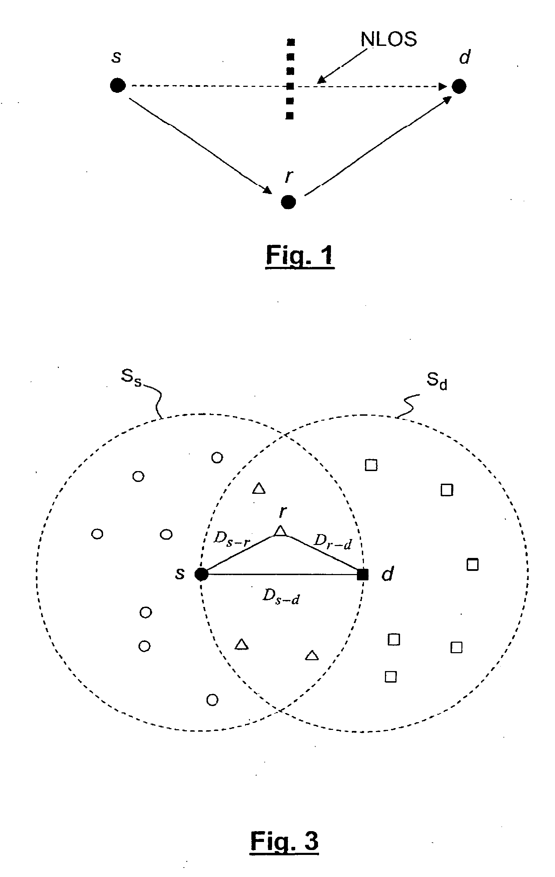

Les systèmes UWB sont de bons candidats pour les réseaux personnels sans fil (WPAN). Dans un réseau sans fil classique, comme un réseau de télécommunication cellulaire, les liaisons sont établies entre un émetteur et un récepteur, sans participation de terminaux tiers. Afin d'améliorer la couverture spatiale des réseaux sans fil, des architectures ad-hoc mettant en oeuvre des stratégies de coopération entre terminaux ont été proposées. La Fig. 1 représente de manière très schématique une stratégie de coopération au sein d'un tel réseau. On suppose qu'un terminal source *s* transmet un flux de données à un terminal destinataire *d*. Le terminal *r* reçoit également le flux de données issu de *s* et le relaie au terminal destinataire *d*. Le terminal *r* coopère ainsi à la transmission de données entre les terminaux *s* et *d*. Par exemple, si le canal *s-d* est de mauvaise qualité, notamment à cause de la présence d'un obstacle entre *s* et *d* (configuration NLOS), le canal *s-r-d* peut permettre de le contourner et d'obtenir une qualité de liaison satisfaisante. Le flux de données peut être relayé par plusieurs terminaux pour davantage augmenter la diversité spatiale des trajets de transmission. En outre, il peut être relayé en un seul bond *(single-hop)* ou en plusieurs bonds successifs *(multiple-hop)*.

On connaît les familles de partage d'accès dans un réseau sans fil : TDMA (partage temporel), CDMA (partage par code), SDMA (partage spatial). Dans un réseau TDMA *(Time Division Multiple Access),* chaque terminal possède un intervalle de transmission qui lui est dédié. On distingue deux modes de coopération possibles dans un réseau TDMA coopératif : la coopération parallèle et la coopération série.

Dans un mode de coopération parallèle, le terminal relais reçoit les données du terminal source pendant l'intervalle de transmission alloué à ce dernier et les retransmet vers le terminal destinataire durant son propre intervalle de transmission. Le terminal destinataire reçoit ainsi les mêmes données, via des trajets différents, une première fois pendant l'intervalle de transmission du terminal source et une seconde fois pendant l'intervalle de transmission du terminal relais. Bien que le qualificatif de parallèle puisse paraître mal choisi du fait de la réception séquentielle des données par le terminal destinataire, il fait en fait référence à l'absence d'interférence entre les deux trajets, résultant de la séparation temporelle des intervalles de transmission des terminaux source et relais. Le fonctionnement en mode de coopération parallèle suppose que le terminal relais n'ait pas de données propres à transmettre pendant son intervalle de transmission. Cette limitation réduit sensiblement les possibilités de coopération.

Dans un mode de coopération série, le terminal relais reçoit les données du terminal source pendant l'intervalle de transmission de ce dernier et les retransmet dans le même intervalle. Le terminal relais ne transmet que ses données propres pendant son intervalle de transmission. Le terminal destinataire reçoit ainsi les données du terminal source, via deux trajets différents pendant un intervalle de transmission du terminal source.

Du fait de la transmission simultanée des données propres et des données relayées pendant le même intervalle de transmission, ces données doivent faire l'objet pour assurer leur orthogonalité à la réception. Ce code est dénommé code spatio-temporel distribué ou DSTC *(Distributed Space Time Code)*.

Les systèmes de télécommunication de type coopératifs sont, comme les systèmes multi-antenne dits MIMO *(Multiple In Multiple Out),* des systèmes à diversité spatiale de transmission. Les systèmes de télécommunication coopératifs sont d'ailleurs une manière élégante d'émuler un système MIMO à partir de terminaux monoantenne. Le type de détection utilisée dans un récepteur de système MIMO ou un système coopératif dépend de 1'information disponible sur le canal. On peut distinguer :

- les systèmes dits cohérents, dans lesquels le récepteur connaît les caractéristiques du canal de transmission, typiquement grâce à une estimation de canal faite à partir de symboles pilotes transmis par l'émetteur. L'estimation de canal est ensuite utilisée pour la détection des symboles d'information. Les systèmes cohérents sont généralement destinés à des applications à haut débit ;

2

- les systèmes non cohérents, dans lesquels le récepteur effectue une détection à l'aveugle des symboles d'information, sans connaissance préalable des caractéristiques du canal de transmission ;
- les systèmes différentiels, dans lesquels les symboles d'information sont codés sous forme de différence de phase ou d'amplitude sur deux symboles de transmission consécutifs. Ces systèmes peuvent ne pas nécessiter une connaissance du canal du côté récepteur.

Un exemple de système coopératif cohérent est connu de l'article de S. Yang et J-C Belfiore intitulé « Optimal space-time codes for the MIMO amplify-and-forward cooperative channel » disponible sur le site www.comelec.enst.fr. Un exemple de système coopératif différentiel a été proposé dans l'article de V. Tarokh et al. publié dans IEEE Journal on selected areas in communications, Vol. 18, N˚7, Juillet 2000.

Si les systèmes dans les articles précités fonctionnent bien pour des signaux à bande étroite, il n'en va pas de même pour des signaux UWB. En effet, ces systèmes utilisent des codes à coefficients complexes. Or, étant donné la très courte durée des impulsions utilisées, il n'est pas possible de récupérer une information de phase dans un signal UWB.

Un système coopératif cohérent utilisant des signaux UWB et un code à éléments réels a été proposé dans l'article de C. Abou-Rjeily et al. intitulé « Distributed algebraic space time codes for ultra-wideband communications » soumis à publication, Kluwer Journal (Springer special issue on Cooperation in Wireless Networks). Comme déjà mentionné, un tel système nécessite toutefois une connaissance du canal de transmission de la part du récepteur.

Un système coopératif utilisant des signaux UWB et une modulation PPM a été proposé dans l'article de C. Cho et al. "A UWB repeater with a short relaying-delay for range extension", IEEE Wireless Communications and Networking Conference 2004, vol. 2, pages 1154-1158, ISBN: 0-7803-8344-3, 21 mars 2004.

L'objectif de l'invention est de proposer un système coopératif UWB de type non-cohérent, robuste et d'architecture particulièrement simple.

## EXPOSÉ DE L'INVENTION

La présente invention est définie par une procédure de coopération entre terminaux dans un système de télécommunication UWB impulsionnel dans lequel un terminal source transmet un symbole d'information pour un terminal destinataire sous la forme d'un signal, dit signal source, constitué d'une séquence de trames identiques, ladite séquence correspondant à un temps symbole, chaque trame contenant une impulsion modulée en position au moyen d'un alphabet de modulation PPM. Un terminal relais, recevant ledit signal source, détecte une position de modulation d'une impulsion dans au moins une trame du signal reçu, dite première position, et transmet un signal relayé contenant, dans au moins une trame ultérieure prédéterminée dudit temps symbole, une impulsion dont la position, dite seconde position, est obtenue à partir de la première position par une permutation de l'alphabet de modulation PPM.

L'invention concerne également un module d'émission/réception d'un terminal de télécommunication UWB impulsionnel destiné à servir de terminal relais, comprenant :

- des moyens de découpage temporel du signal reçu selon une pluralité de fenêtres temporelles consécutives correspondant aux trames d'un signal UWB émis par un terminal source, obtenant ainsi une pluralité de signaux de trame ;
- des moyens pour mesurer, pour au moins une trame, l'énergie du signal de trame en une pluralité de positions de modulation d'un alphabet PPM prédéterminé ;
- des moyens de détection de la position correspondant à la plus élevée des énergies ainsi mesurées dans ladite trame ;
- des moyens de permutation des positions dudit alphabet PPM pour obtenir une position permutée à partir de la position ainsi détectée ;
- des moyens de génération d'une impulsion en ladite position permutée pendant une trame du signal reçu postérieure à ladite trame.

L'invention concerne enfin un module de réception d'un terminal de télécommunication UWB impulsionnel dans lequel un symbole d'information est transmis sous la forme d'un signal, dit signal source, constitué d'une séquence de trames identiques, chaque trame contenant une impulsion modulée en position au moyen d'un alphabet de modulation PPM, ledit module de réception comprenant :

- des moyens de découpage temporel du signal temporel selon une pluralité de fenêtres temporelles correspondant chacune à deux trames consécutives du signal source, dite première et deuxième trames ;
- des moyens pour mesurer l'énergie du signal reçu, au sein de chaque première trame, en chaque position de modulation dudit alphabet PPM, obtenant ainsi une première valeur d'énergie par position de modulation ;

- des moyens pour mesurer l'énergie du signal reçu, au sein de chaque seconde trame, en chaque position de modulation dudit alphabet PPM et en des positions obtenues à partir de ces dernières au moyen d'une permutation prédéterminée, obtenant ainsi une seconde et une troisième valeurs d'énergie par position de modulation ;
- des moyens pour sommer, pour chaque position de modulation, les première, seconde et troisième valeurs d'énergie, obtenant ainsi une quatrième valeur d'énergie pour chaque position de modulation ;
- des moyens pour sommer, pour chaque position de modulation, les quatrièmes valeurs d'énergie obtenues pour les différentes fenêtres temporelles, obtenant ainsi une cinquième valeur d'énergie pour chaque position de modulation ;
- des moyens pour déterminer la position de modulation correspondant à la plus élevée desdites cinquièmes valeurs d'énergie ;
- des moyens pour déterminer à partir de la position ainsi obtenue ledit symbole d'information.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

la Fig. 1 illustre schématiquement une stratégie de coopération connue dans un réseau sans fil ;
la Fig. 2A illustre un signal UWB impulsionnel transmis par un terminal source ;
la Fig. 2B illustre un signal UWB impulsionnel transmis par un terminal relais ;
la Fig. 2C illustre un signal UWB impulsionnel reçu par un terminal destinataire au sein d'un réseau coopératif utilisant la procédure de coopération selon l'invention ;
la Fig. 3 illustre le choix d'un terminal relais par concertation entre un terminal source et un terminal destinataire ;
la Fig. 4 illustre schématiquement un module d'émission/réception d'un terminal relais selon un mode de réalisation de l'invention ;
la Fig. 5 illustre schématiquement un module de réception d'un terminal destinataire selon un mode de réalisation de l'invention ;
la Fig. 6 représente le détail d'un bloc du module de réception de la Fig. 5.

## EXPOSÉ DÉTAILLÉ DE MODES DE RÉALISATION PARTICULIERS

L'idée à la base de l'invention est d'utiliser une stratégie de coopération utilisant des signaux UWB à modulation de position ou PPM *(Pulse Position Modulation)* en veillant à l'orthogonalité entre le signal à relayer et le signal relayé.

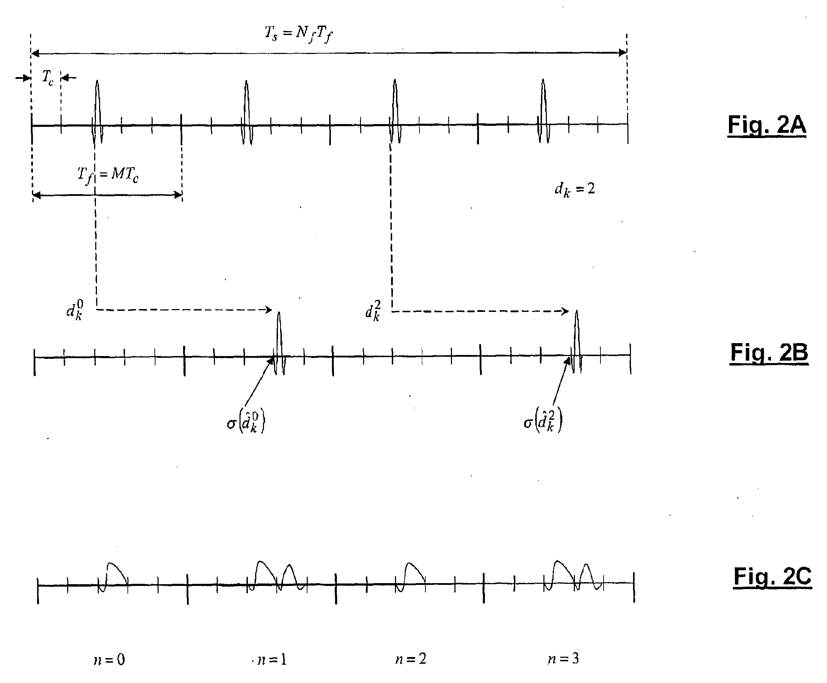

La Fig. 2A montre un tel signal UWB à modulation PPM. Un symbole d'information à transmettre y est codé sur un temps symbole $T_s = N_f T_f$ où $T_f$ est une durée de trame. Chaque trame est elle-même divisée en une pluralité $M$ d'intervalles élémentaires de durée $T_c$, encore appelés intervalles de répétition d'impulsion ou PRI *(Pulse Repetition Interval)*.

Le signal UWB transmis par le terminal source $k$ peut s'exprimer par:

$$s_k(t) = A_k^s \sum_{n=0}^{N_f-1} p\left(t - nT_f - d_k T_c\right) \qquad (1)$$

où $p(t)$ est la forme d'onde de l'impulsion élémentaire, $A_s^k$ est un coefficient dépendant de la puissance d'émission et $d_k \in \{0,..,M\text{-}1\}$ est la position $M$-aire PPM du symbole à transmettre. $M$ représente la cardinalité de l'alphabet de la modulation PPM. On remarquera que la position de modulation $d_k$ est identique dans les $N_f$ différentes trames constitutives du signal. Il n'est en effet pas nécessaire de prévoir ici des séquences de sauts temporels distincts pour les différents utilisateurs comme en TH-UWB *(Time Hopping UWB)*, la séparation d'accès étant réalisée par des intervalles de transmission distincts. Chaque intervalle de transmission ou TTI *(Transmission Time Interval)* est divisé en une pluralité de temps symbole $T_s$.

La durée $T_c$ de l'intervalle élémentaire est avantageusement choisie supérieure à l'étalement du canal, généralement de l'ordre de 100ns. On obtient ainsi une séparation des impulsions à la réception sans avoir à procéder à une égalisation préalable.

Le terminal relais $r$ reçoit le signal émis par le terminal source s pendant l'intervalle de transmission (TTI) alloué à ce dernier. Le signal reçu par le terminal relais peut s'exprimer par :

$$\rho_k(t) = A_k^s \sum_{n=0}^{N_f-1} p\left(t - nT_f - d_k T_c\right) \otimes h_{sr}(t) + w(t) \tag{2}$$

où $h_{sr}$ est la réponse impulsionnelle du canal entre $s$ et $r$, supposée avoir un support temporel inférieur à $T_c$ et $w$ est une fonction aléatoire de bruit.

Le terminal relais effectue une détection non cohérente dans les trames de rang $n$ pair (la première trame du symbole étant indexée par 0). Pour ce faire, le terminal relais calcule au vol l'énergie du signal reçu pour les différentes positions de modulation au sein de la trame paire courante, à savoir :

$$\varepsilon_k^n(m) = \int_{nT_f + mT_c}^{nT_f + (m+1)T_c} \left|\rho_k(t)\right|^2 dt \tag{3}$$

et détermine, pour chaque trame de rang $n$ pair, la position correspondant au symbole transmis au moyen de :

$$\hat{d}_k^n = Arg \max_m \left(\varepsilon_k^n(m)\right) \tag{4}$$

On notera que si la détection est correcte, on a bien entendu:

$$\hat{d}_k^n = d_k, \quad \forall n \text{ pair }, 0 \le n \le N_f - 1 \tag{5}$$

A partir de la valeur de la position détectée à la trame $n$, le terminal relais transmet à la trame suivante $n+1$ un signal relayé. Le signal relayé peut s'exprimer par:

$$s_k^r(t) = A_k^r \sum_{\substack{n=0 \\ n \text{ pair}}}^{N_f-1} p\left(t - (n+1)T_f - \sigma\left(\hat{d}_k^n\right)T_c\right) \tag{6}$$

où $A_k^r$  est un coefficient dépendant de la puissance d'émission du terminal relais et où $\sigma$ est une permutation de l'alphabet $\{0,.., M\text{-}1\}$, par exemple une permutation circulaire. On appelle permutation toute bijection de $\{0,...,M\text{-}1\}$ sur lui-même, hors l'identité. Une permutation circulaire $\sigma$ est, quant à elle, définie par la relation $\sigma(m)=m+q(\bmod M)$ où $q$ est un entier tel que $0<q\le M\text{-}1$.

On a représenté le signal relayé en Fig. 2B en supposant que la détection par le terminal relais était correcte au sens de (5). On remarque que le signal relayé n'est présent que dans les trames de rang impair ($n$=1;$n$=3) et que la position PPM à l'intérieur de ces trames à subi une permutation par rapport à celles du signal source, ici une rotation cyclique d'une position vers la droite, soit $\sigma(m)=m$+1(mod M).

Le signal reçu par le terminal destinataire d peut s'exprimer par :

$$R_k(t) = A_k^s \sum_{n=0}^{N_f-1} p\left(t - nT_f - d_k T_c\right) \otimes h_{sd}(t) +$$

$$A_k^r \sum_{\substack{n=0 \\ n \text{ pair}}}^{N_f-1} p\left(t - (n+1)T_f - \sigma\left(\hat{d}_k^n\right)T_c\right) \otimes h_{rd}(t) + v(t) \qquad (7)$$

où $h_{rd}(t)$ est la réponse impulsionnelle du canal entre $r$ et $d$, de support temporel inférieur à $T_c$ et où $v(t)$ est une fonction aléatoire représentant le bruit. On voit d'après (7) que le principe de coopération entre les terminaux est particulièrement robuste puisque l'orthogonalité entre les signaux direct et relayé étant assurée par une simple permutation temporelle prédéterminée sur les positions PPM. En effet, si la détection par le relais est correcte : $\sigma\left(\hat{d}_k^n\right) = \sigma(d_k) \neq d_k$ et on rappelle qu'il n'y a pas chevauchement des impulsions car $T_c$ est supérieur à l'étalement du canal ($s\text{-}r$ ou $s\text{-}r\text{-}d$).

Le terminal destinataire effectue une détection non cohérente sur le signal reçu. Pour ce faire, il calcule l'énergie totale, pour chaque position PPM, à savoir:

$$E_k(m) \doteq \sum_{n=0}^{N_f-1}\left(\int_{nT_f+mT_c}^{nT_f+(m+1)T_c} |R_k(t)|^2 dt\right) + \sum_{\substack{n=0 \\ n \text{ pair}}}^{N_f-1}\left(\int_{nT_f+\sigma(m)T_c}^{nT_f+(\sigma(m)+1)T_c} |R_k(t)|^2 dt\right)$$

$$(8)$$

Le premier terme de (8) correspond au signal reçu directement du terminal source alors que le second terme est relatif au signal reçu via le terminal relais. Le symbole $M$-aire détecté est alors obtenu à partir de la décision:

$$\hat{d}_k = Arg\max_m\left(E_k(m)\right) \qquad (9)$$

On remarquera que ni le terminal destinataire ni le terminal relais n'ont eu besoin de procéder à une estimation de canal.

Le choix des coefficients $A_k^s$, $A_k^r$ et donc des puissances d'émission des terminaux source et relais dépend des conditions d'opération.

Nous considérerons tout d'abord le cas où l'on ne connaît pas les conditions respectives des canaux de transmission $s\text{-}d$ et $r\text{-}d$. Les coefficients en question peuvent être choisis selon deux modes distincts :

- selon un premier mode, les puissances émises par le terminal source et le terminal relais sont choisies telles que leur somme respecte le masque spectral FCC précité. Autrement dit, si $P$ est la valeur de puissance permettant de respecter le masque spectral, on choisit les puissances du terminal source et du terminal relais égales à $2P/3$ et $P/3$, respectivement. Compte tenu du fait que le terminal relais transmet deux fois moins d'impulsions que le terminal source, cela revient en fait à choisir $\left|A_k^s\right|^2 = \left|A_k^r\right|^2 = \frac{1}{2}A^2$ où $A$ est la valeur de l'amplitude qui aurait permis de satisfaire au masque spectral avec le terminal source seul. On comprend ainsi que le premier mode puisse permettre, pour un même BER, d'économiser la puissance du terminal source en la distribuant entre source et relais ;

- selon un second mode, les puissances respectives des terminaux source et relais satisfont individuellement au masque spectral. Dans ce cas, la puissance totale émise est deux fois supérieure à celle qu'aurait émise le terminal source seul. On a alors $\left| A_k^s \right|^2 = \dfrac{1}{2} \left| A_k^r \right|^2 = A^2$. Le second mode permet d'obtenir un gain de puissance de 3dB à la réception. Autrement dit, par rapport au premier mode ci-dessus ou bien un fonctionnement sans relais, on pourra obtenir un même BER pour un rapport signal à bruit deux fois plus faible par rapport au premier mode de fonctionnement ou un fonctionnement sans relais.

Si l'on connaît les conditions des canaux *s-d* et *r-d*, par exemple les coefficients d'atténuation sur ces canaux, la répartition de puissance entre terminaux source et relais selon le premier mode ne se fait plus seulement en prenant en compte le nombre d'impulsions transmises dans $s_k$ et $s_k^r$ mais aussi les conditions d'atténuation. Les puissances d'émission de *s* et *r* sont alors choisies telles que :

$$P_s = aP \ \ \text{et} \ \ P_r = bP \ \ \text{avec} \ \ a + b = 1 \qquad\qquad (10)$$

où les coefficients de pondération *a* et *b* sont déterminés par exemple en fonction des coefficients d'atténuation des canaux *s-d* et *r-d*.

Les coefficients *a* et *b* peuvent alternativement être déterminés à partir de boucles de contrôle de puissance de transmission. Pour ce faire, des indications de contrôle de puissance, $TPC_s$ et $TPC_d$ *(Transmission Power Control)* sont renvoyées par le terminal *d*, via deux voies de retour, vers les terminaux *s* et *r*. Cela suppose que l'on fasse périodiquement une détection séparée du signal direct et du signal relayé. En fonction des indications $TPI_S$ et $TPI_d$, le terminal *s* décrémente/incrémente *a* et le terminal r incrémente/décrémente *b* de sorte que la somme des coefficients de pondération *a+b* reste égale à 1.

Selon une variante correspondant à un fonctionnement selon le second mode, on peut prévoir des voies de retour indépendantes, les coefficients *a* et *b* n'étant plus liés mais restant chacun inférieur à 1 pour respecter le masque spectral.

La stratégie de coopération décrite ci-dessus, on a supposé que l'on disposait d'un terminal relais *r* donné. En règle générale cependant, plusieurs terminaux peuvent être candidats à la fonction de relais. Il faut alors procéder à une sélection.

Avantageusement, selon une première variante de réalisation, le choix du terminal relais est effectué par concertation entre le terminal source *s* et le terminal destinataire d sur la base d'un critère de proximité. On suppose tout d'abord que les terminaux peuvent déterminer les distances qui les séparent (*peer to peer ranging)* selon un moyen classique de calcul de pseudodistance ou bien de temps de propagation aller-retour. Les signaux UWB se prêtent facilement de par leurs formes d'onde (brèves impulsions temporelles) à une application de localisation. On trouvera par exemple une description d'une méthode de calcul de distances entre terminaux UWB dans l'article de Neiyer S. Correal *et al.* intitulé « An UWB relative location system » disponible sous le site www.ee.vt.edu.

Les terminaux *s* et *d* déterminent d'abord la distance $D_{s\text{-}d}$ qui les sépare. Le terminal s détermine ensuite l'ensemble $S_s$ de ses proches voisins : pour ce faire, il mesure les distances qui le séparent des terminaux environnants et sélectionne ceux se situant à moins de $D_{s\text{-}d}$ de lui. Le terminal *d* détermine de même l'ensemble $S_d$ de ses proches voisins. Le terminal relais est sélectionné au sein de l'ensemble $S_s \cap S_d$ comme le terminal minimisant la somme $D_{s\text{-}r}+D_{r\text{-}d}$ où $D_{s\text{-}r}$ et $D_{r\text{-}d}$ sont les distances entre *s* et *r* d'une part et *r* et *d* d'autre part. Si l'ensemble $S_s \cap S_d$ est vide, la procédure de coopération est temporairement abandonnée.

Selon une seconde variante de réalisation, le terminal relais est sélectionné au sein de l'ensemble $S_s \cap S_d$, sur la base d'un taux d'erreur (BER). Pour ce faire, le terminal source transmet une séquence de symboles prédéterminés, dite séquence de consigne, par exemple une séquence de contrôle ou une séquence de symboles pilote, aux terminaux environnants. Cette séquence est connue de tous les terminaux et chaque terminal qui la reçoit peut ainsi déterminer son BER par comparaison entre la séquence détectée et la séquence de consigne. Ceux qui appartiennent à $S_s \cap S_d$ et dont le BER est inférieur à une valeur seuil renvoient alors un message d'acquittement au terminal source, spécifiant éventuellement la plage de taux d'erreur mesuré et/ou la charge courante du terminal. Le terminal source sélectionne le terminal relais parmi eux.

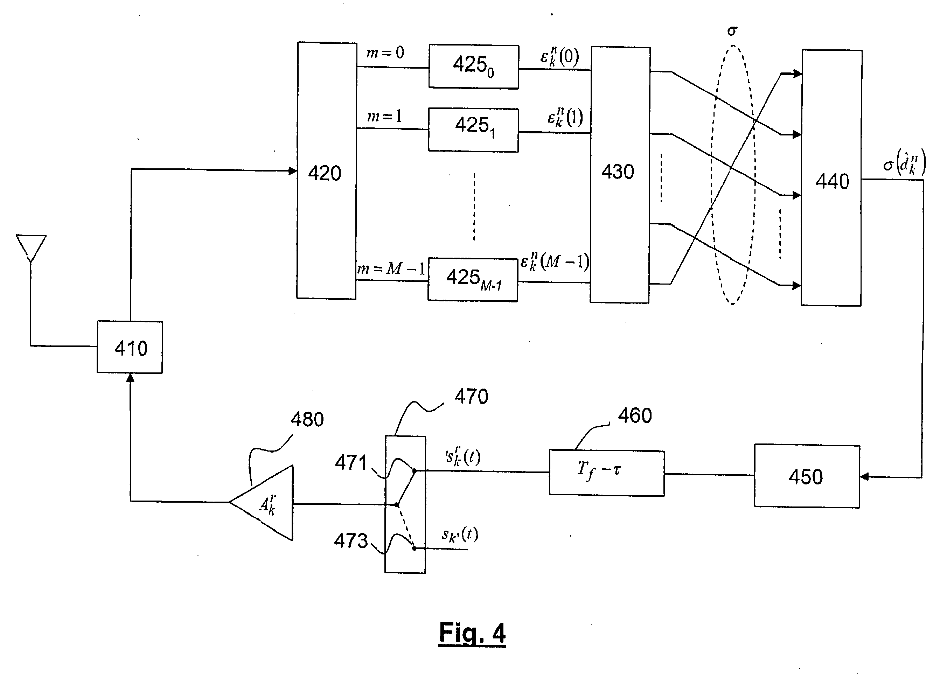

La Fig. 4 illustre schématiquement un exemple de réalisation du module d'émission/réception d'un terminal relais selon l'invention.

Le signal du terminal source est reçu via le duplexeur 410. Le duplexeur 410 est en position de réception pour les trames paires et en position d'émission pour les trames impaires. Le signal reçu subit un découpage temporel pour chaque position de modulation de l'alphabet PPM dans le module 420. Le découpage temporel de 420 est déclenché au début de chaque trame paire et dure un temps $T_c$ pour chacune des $M$ positions de modulation. Les intégrateurs quadratiques $425_0,..,425_{M-1}$ reçoivent respectivement les $M$ signaux ainsi obtenus et mesurent les valeurs d'énergie

$$\varepsilon_k^n(m), \ m = 0,..,M-1 \ .$$ Ces valeurs sont fournies sous forme analogique au module de décision 430. Celui-ci en effectue une comparaison et détecte la position la plus énergétique. Il fournit en sortie un mot de $M$ bits codant la valeur $\hat{d}_k^n$, par exemple au moyen d'un bit égal à 1 pour la position de modulation détectée et à 0 pour les autres bits.

Ce mot subit ensuite une permutation circulaire σ de ses bits, réalisée ici par câblage, avant d'être transformé en séquence de $M$ bits par le convertisseur parallèle série 440. La séquence de bits est ensuite modulée par un modulateur d'impulsion 450. Plus précisément, ce modulateur transforme une séquence $c_0,..,c_{M-1}$ de $M$ bits en un signal

analogique $\displaystyle\sum_{m=0}^{M-1} c_m.p(t-mT_c)$ . Ce signal subit ensuite un retard de $T_f$-τ dans la ligne à retard 460 où τ est la durée de traitement dans la chaîne 410 à 450 avant d'être transmis, via l'amplificateur 480 et le duplexeur 410. On a fait figurer en 470 un commutateur en amont de l'amplificateur 480, recevant sur ses entrées le signal relayé $s_k^r(t)$ et le signal propre $s_k'(t)$ du terminal relais. Le commutateur est en position 471 pendant un intervalle TTI alloué au terminal source et en position 473 pendant un intervalle TTI alloué au terminal relais.

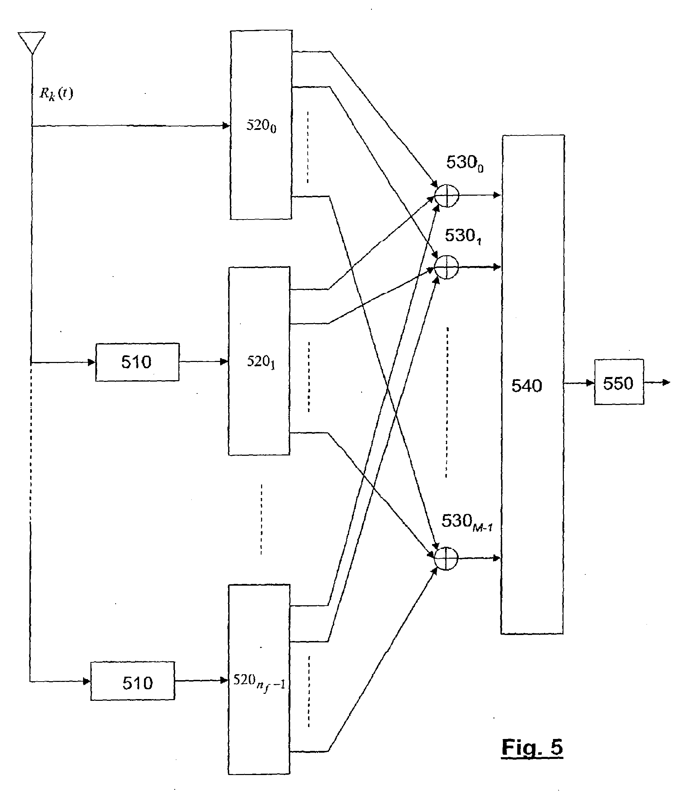

La Fig. 5 illustre schématiquement un exemple de réalisation du module de réception du terminal destinataire selon l'invention.

On a supposé dans cette figure que l'on avait un nombre pair $2n_f$ de trames, c'est-à-dire $N_f$=$2n_f$-1. Le signal reçu $R_k(t)$ est retardé par les ($n_f$-1) lignes à retard 510, chacune de valeur de retard $2T_f$

Le signal $R_k(t)$ et les signaux retardés sont traités par $n_f$ modules $520_0,...,520_{n_f-1}$, chacun de ces modules effectuant un traitement sur deux trames consécutives du signal reçu.

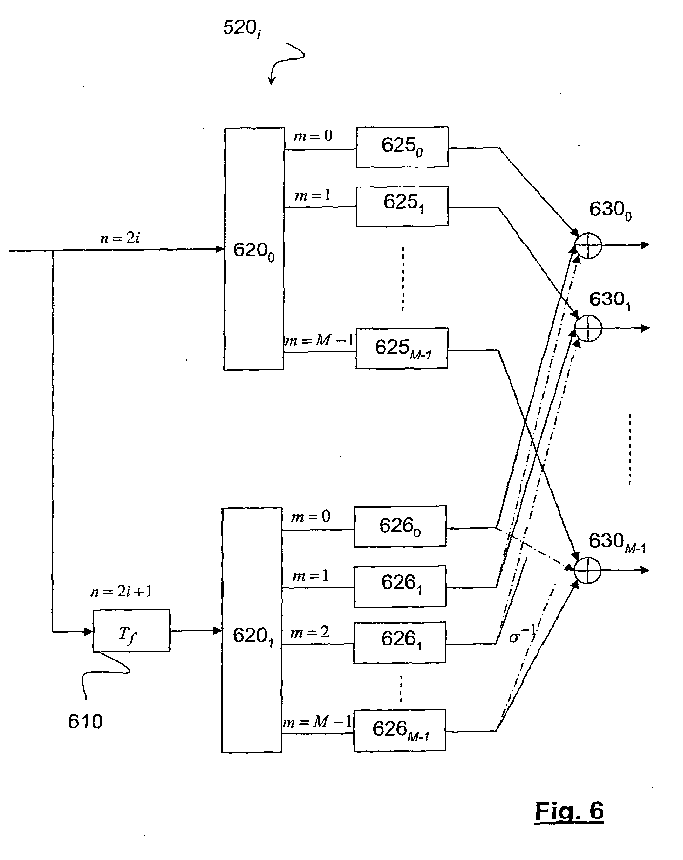

La Fig. 6 illustre schématiquement la structure d'un module $520_i$. Le signal en entrée est fourni à un premier module de découpage temporel $620_0$ et, à un second module de découpage temporel $620_1$ à travers une ligne à retard 610 de valeur $T_f$. Les modules $620_0$ et $620_1$ sont de structure identique et effectuent un découpage par position de modulation comme les modules 420 déjà décrits, le module $620_0$ prenant en charge la trame de rang pair $2i$ et le $620_1$, la trame de rang impair $2i$+1. Les énergies des signaux ainsi découpés sont obtenues au moyen de $2M$ intégrateurs quadratiques référencés $625_0,...,625_{M-1}$ pour la trame de rang pair et $626_0,...,626_{M-1}$ pour la trame de rang impair. Ces énergies sont sommées au moyen des sommateurs $630_0,..., 630_{M-1}$, chaque sommateur $630_m$ étant relié en entrée à l'intégrateur $625_m$ ainsi qu'aux deux intégrateurs $626_m$ et $626_{\sigma(m)}$. Le sommateur $625_m$ fournit ainsi en sortie la valeur:

$$\left( \int_{nT_f+mT_c}^{nT_f+(m+1)T_c} \left| R_k(t) \right|^2 dt \right) + \left( \int_{(n+1)T_f+mT_c}^{(n+1)T_f+(m+1)T_c} \left| R_k(t) \right|^2 dt \right) + \left( \int_{(n+1)T_f+\sigma(m)T_c}^{(n+1)T_f+(\sigma(m)+1)T_c} \left| R_k(t) \right|^2 dt \right)$$

$$(11)$$

où $n$=$2i$ est le rang (pair) de la trame prise en charge par le module $620_0$.

Revenant maintenant à la Fig. 5, les $n_f$ sorties des modules 520 correspondant à une même position de modulation **m** sont sommées au moyen d'un sommateur $530_m$. Les sorties de ces $M$ sommateurs représentent les variables de décision $E_k(m)$ de l'équation (8). Le module 540 effectue une comparaison des valeurs $E_k(m)$, $m$=0,..,$M$-1 et détermine la position la plus énergétique $\hat{d}_k$, conformément à (9). Il en déduit en 550 le symbole d'information correspondant à ladite position de modulation.

Dans la description précédente de l'invention, on a supposé que le terminal relais avait un « taux de relayage de 1/2 », les trames paires du signal reçu étant relayées pendant les trames impaires de ce signal. De manière générale, on comprend que le terminal relais puisse avoir un « taux de relayage » de 1/$n$ avec $n$≥2, chaque $n$ ième du signal reçu étant relayé pendant une trame ultérieure de ce signal.

**Revendications**

1. Procédure de coopération entre terminaux dans un système de télécommunication UWB impulsionnel, **caractérisée en ce qu'**un terminal source transmet un symbole d'information pour un terminal destinataire sous la forme d'un signal, dit signal source, constitué d'une séquence de trames identiques, ladite séquence correspondant à un temps symbole, chaque trame contenant une impulsion modulée en position au moyen d'un alphabet de modulation PPM, et qu'un terminal relais, recevant ledit signal source, détecte une position de modulation d'une impulsion dans au moins une trame du signal reçu, dite première position, et transmet un signal relayé contenant, dans au moins une trame ultérieure prédéterminée dudit temps symbole, une impulsion dont la position, dite seconde position, est obtenue à partir de la première position par une permutation de l'alphabet de modulation PPM.

2. Procédure de coopération selon la revendication 1, **caractérisée en ce que** la seconde position est obtenue par comparaison des énergies reçues dans les différentes positions de l'alphabet de modulation PPM dans ladite trame de signal reçu.

3. Procédure de coopération selon la revendication 1 ou 2, **caractérisée en ce que** ladite trame ultérieure du signal relayé est consécutive à ladite trame de signal reçu.

4. Procédure de coopération selon l'une des revendications précédentes, **caractérisée en ce que** ladite permutation est une permutation circulaire.

5. Procédure de coopération selon l'une des revendications précédentes, **caractérisée en ce que** les puissances de transmission du terminal source et du terminal relais sont choisies égales à $a.P$ et $b.P$ où $P$ est une valeur de puissance respectant le masque spectral UWB et où $a$ et $b$ sont des coefficients tels que $0<a<1$ et $0<b<1$ avec $a+b=1$.

6. Procédure de coopération selon la revendication 5, **caractérisée en ce que** les coefficients $a$ et $b$ sont déterminés en fonction des conditions respectives du canal entre le terminal source et le terminal destinataire et du canal entre le terminal relais et le terminal destinataire.

7. Procédure de coopération selon la revendication 5, **caractérisée en ce que** les coefficients $a$ et $b$ sont contrôlés au moyen de boucles de contrôle de puissance par deux voies de retour du terminal destinataire vers le terminal source et le terminal relais respectivement.

8. Procédure de coopération selon l'une des revendications 1 à 4, **caractérisée en ce que** les puissances de transmission du terminal source et du terminal relais sont choisies chacune égale à une valeur de puissance respectant le masque spectral UWB.

9. Procédure de coopération selon l'une des revendications précédentes, **caractérisée en ce que** ledit terminal relais est déterminé par les terminaux source et destinataire au moyen des étapes suivantes :

   - détermination de la distance séparant le terminal source et le terminal relais ;
   - détermination d'un premier ensemble de terminaux situés à moins de ladite distance du terminal source ;
   - détermination d'un second ensemble de terminaux situés à moins de ladite distance du terminal source ;
   - sélection du terminal relais parmi les terminaux communs auxdits premier et second ensembles, dits terminaux candidats, comme celui minimisant la somme des distances entre le terminal source et le terminal candidat, d'une part, et le terminal candidat et le terminal destinataire, d'autre part.

10. Procédure de coopération selon l'une des revendications 1 à 8, **caractérisée en ce que** ledit terminal relais est déterminé par les terminaux source et destinataire au moyen des étapes suivantes :

   - détermination de la distance séparant le terminal source et le terminal relais ;
   - détermination d'un premier ensemble de terminaux situés à moins de ladite distance du terminal source ;
   - sélection du terminal relais parmi les terminaux communs auxdits premier et second ensembles, dits terminaux candidats ;
   - détermination d'un second ensemble de terminaux situés à moins de ladite distance du terminal source ;
   - détermination des terminaux communs auxdits premier et second ensembles, dits terminaux candidats, et envoi d'une séquence de symboles prédéterminés par le terminal source auxdits terminaux candidats, le terminal relais étant sélectionné comme le terminal candidat détectant ladite séquence avec le taux d'erreur le plus faible.

**11.** Procédure de coopération selon l'une des revendications précédentes, **caractérisée en ce que** ledit terminal destinataire, recevant à la fois le signal source et le signal relayé :

- mesure pour chaque trame d'un premier sous-ensemble de trames du signal reçu ne correspondant pas à une trame du signal relayé, les énergies reçues dans les différentes positions de l'alphabet de modulation PPM, obtenant ainsi une première valeur d'énergie pour chaque position de modulation ;
- mesure pour chaque trame d'un second sous-ensemble de trames du signal reçu, correspondant chacune à une trame du signal relayé, les énergies reçues en chaque position dudit alphabet et en une position obtenue à partir de cette dernière par ladite permutation, obtenant ainsi une seconde et une troisième valeurs d'énergie pour chaque position de modulation ;
- somme pour chaque position de modulation lesdites première, seconde et troisième valeurs d'énergie, obtenant ainsi une valeur d'énergie totale pour chaque position de modulation ;
- compare les valeurs d'énergie totale des différentes positions de modulation et détermine la position correspondant à la valeur d'énergie totale la plus élevée ;
- détermine ledit symbole d'information à partir de la position ainsi obtenue.

**12.** Module d'émission/réception d'un terminal de télécommunication UWB impulsionnel **caractérisé en ce qu'**il comprend :

- des moyens de découpage temporel (420) du signal reçu selon une pluralité de fenêtres temporelles consécutives correspondant aux trames d'un signal UWB émis par un terminal source, obtenant ainsi une pluralité de signaux de trame ;
- des moyens pour mesurer $(425_0,425_1,...,425_{M-1})$ pour au moins une trame, l'énergie du signal de trame en une pluralité de positions de modulation d'un alphabet PPM prédéterminé ;
- des moyens de détection (430) de la position correspondant à la plus élevée des énergies ainsi mesurées dans ladite trame ;
- des moyens de permutation des positions dudit alphabet PPM pour obtenir une position permutée à partir de la position ainsi détectée ;
- des moyens de génération (440,450,460) d'une impulsion en ladite position permutée pendant une trame du signal reçu postérieure à ladite trame.

**13.** Module d'émission/réception selon la revendication 12, **caractérisé en ce que** les moyens de permutation sont adaptés à effectuer une permutation circulaire dudit alphabet.

**14.** Module d'émission réception selon la revendication 12 ou 13, **caractérisé en ce que** ladite trame postérieure du signal reçu est consécutive à ladite trame.

**15.** Module de réception d'un terminal de télécommunication UWB impulsionnel dans lequel un symbole d'information est transmis sous la forme d'un signal, dit signal source, constitué d'une séquence de trames identiques, chaque trame contenant une impulsion modulée en position au moyen d'un alphabet de modulation PPM, **caractérisé en ce qu'**il comprend :

- des moyens de découpage temporel $(520_0,...,520_{nf-1})$ du signal temporel selon une pluralité de fenêtres temporelles correspondant chacune à deux trames consécutives du signal source, dite première et deuxième trames $(2i,2i+1)$ ;
- des moyens pour mesurer l'énergie du signal reçu $(625_0,625_1,..,625_{M-1},620_0),$ au sein de chaque première trame, en chaque position de modulation dudit alphabet PPM, obtenant ainsi une première valeur d'énergie par position de modulation ;
- des moyens pour mesurer l'énergie du signal reçu, au sein de chaque seconde trame $(626_0,626_1,..,626_{M-1}, 620_1),$ en chaque position de modulation dudit alphabet PPM et en des positions obtenues à partir de ces dernières au moyen d'une permutation prédéterminée, obtenant ainsi une seconde et une troisième valeurs d'énergie par position de modulation ;
- des moyens pour sommer $(630_0,..,630_{M-1}),$ pour chaque position de modulation, les première, seconde et troisième valeurs d'énergie, obtenant ainsi une quatrième valeur d'énergie pour chaque position de modulation ;
- des moyens pour sommer $(530_0,..,530_{M-1}),$ pour chaque position de modulation, les quatrièmes valeurs d'énergie obtenues pour les différentes fenêtres temporelles, obtenant ainsi une cinquième valeur d'énergie pour chaque position de modulation ;
- des moyens pour déterminer (540) la position de modulation correspondant à la plus élevée desdites cinquièmes valeurs d'énergie ;
- des moyens pour déterminer **(550)** à partir de la position ainsi obtenue ledit symbole d'information.

**16.** Module de réception selon la revendication 15, **caractérisé en ce que** ladite permutation prédéterminée est une permutation circulaire dudit alphabet PPM.

**Claims**

**1.** Cooperation procedure between terminals in a UWB pulse telecommunications system, **characterised in that** a source terminal transmits a data symbol for a recipient terminal in the form of a signal, called a source signal, constituted by a sequence of identical frames, said sequence corresponding to a symbol time, with each frame containing a pulse that is position-modulated by means of a PPM modulation alphabet, and **in that** a relay terminal, receiving said source signal, detects a modulation position of a pulse in at least one frame of the signal received, called the first position, and transmits a relayed signal containing, in at least one predetermined subsequent frame of said symbol time, a pulse of which the position, called the second position, is obtained from the first position by a permutation of the PPM modulation alphabet.

**2.** Cooperation procedure according to claim 1, **characterised in that** the second position is obtained by comparing the energies received in the different positions of the PPM modulation alphabet in said received signal frame.

**3.** Cooperation procedure according to claim 1 or 2, **characterised in that** said subsequent frame of the relayed signal is consecutive to said received signal frame.

**4.** Cooperation procedure according to one of the previous claims, **characterised in that** said permutation is a circular permutation.

**5.** Cooperation procedure according to one of the previous claims, **characterised in that** the transmission powers of the source terminal and the relay terminal are chosen so as to be equal to $a.P$ and $b.P$ where $P$ is a power value complying with the UWB spectral mask and where $a$ and $b$ are coefficients such that **0<$a$<1** and **0<$b$<1** with **$a+b$=1.**

**6.** Cooperation procedure according to claim 5, **characterised in that** the coefficients $a$ and $b$ are determined according to the respective conditions of the channel between the source terminal and the recipient terminal and the channel between the relay terminal and the recipient terminal.

**7.** Cooperation procedure according to claim 5, **characterised in that** the coefficients $a$ and $b$ are controlled by means of power control loops by two return paths from the recipient terminal to the source terminal and the relay terminal, respectively.

**8.** Cooperation procedure according to one of claims 1 to 4, **characterised in that** the transmission powers of the source terminal and the relay terminal are each chosen so as to be equal to a power value complying with the UWB spectral mask.

**9.** Cooperation procedure according to one of the previous claims, **characterised in that** said relay terminal is determined by the source and recipient terminals by means of the following steps:

- determining the distance separating the source terminal and the relay terminal;
- determining a first set of terminals located at a shorter distance than said distance from the source terminal;
- determining a second set of terminals located at a shorter distance than said distance from the source terminal;
- selecting a relay terminal among the terminals common to said first and second sets, called candidate terminals, as the one minimising the sum of the distances between the source terminal and the candidate terminal, and between the candidate terminal and the recipient terminal.

**10.** Cooperation procedure according to one of claims 1 to 8, **characterised in that** said relay terminal is determined by the source and recipient terminals by means of the following steps:

- determining the distance separating the source terminal and the relay terminal;
- determining a first set of terminals located at a shorter distance than said distance from the source terminal;

- selecting the relay terminal from the terminals common to said first and second sets, called candidate terminals;
- determining a second set of terminals located at a shorter distance than said distance from the source terminal;
- determining the terminals common to said first and second sets, called candidate terminals, and sending a sequence of predetermined symbols by the source terminal to said candidate terminals, with the relay terminal being selected as the candidate terminal detecting said sequence with the lowest error rate.

11. Cooperation procedure according to one of the previous claims, **characterised in that** said recipient terminal, receiving both the source signal and the relayed signal:

- measures, for each frame of a first subset of frames of the received signal, not corresponding to a frame of the relayed signal, the energies received in the different positions of the PPM modulation alphabet, thus obtaining a first energy value for each modulation position;
- measures, for each frame of a second subset of frames of the received signal, each corresponding to a frame of the relayed signal, the energies received in each position of said alphabet and in a position obtained on the basis of the latter by said permutation, thus obtaining a second and a third energy value for each modulation position;
- sums, for each modulation position, said first, second and third energy values, thus obtaining a total energy value for each modulation position;
- compares the total energy values of the different modulation positions and determines the position corresponding to the highest total energy value;
- determines said data symbol on the basis of the position thus obtained.

12. Transmission/reception module of a UWB pulse telecommunications terminal, **characterised in that** it includes:

- means for time slicing (420) the signal received according to a plurality of consecutive time windows corresponding to the frames of a UWB signal transmitted by a source terminal, thus obtaining a plurality of frame signals;
- means for measuring ($425_0$, $425_1$,...., $425_{M-1}$), for at least one frame, the energy of the frame signal in a plurality of modulation positions of a predetermined PPM alphabet;
- means for detecting (430) the position corresponding to the highest of the energies thus measured in said frame;
- means for permutation of the positions of said PPM alphabet in order to obtain a permuted position from the position thus detected;
- means for generating (440, 450, 460) a pulse in said permuted position during a frame of the signal received following said frame.

13. Transmission/reception module according to claim 12, **characterised in that** the permutation means are suitable for performing a circular permutation of said alphabet.

14. Transmission/reception module according to claim 12 or 13, **characterised in that** said frame following the signal received is consecutive to said frame.

15. Reception module of a UWB pulse telecommunications terminal in which a data symbol is transmitted in the form of a signal, called a source signal, constituted by a sequence of identical frames, with each frame containing a pulse that is position-modulated by means of a PPM modulation alphabet, **characterised in that** it includes:

- means for time slicing ($520_0$,...,$520_{n_f-1}$) the time signal according to a plurality of time windows each corresponding to two consecutive frames of the source signal, called first and second frames ($2i, 2i+1$) ;
- means for measuring the energy of the signal received ($625_0, 625_1,..,625_{M-1}, 620_0$), in each first frame, at each PPM alphabet modulation position, thus obtaining a first energy value for each modulation position;
- means for measuring the energy of the signal received, in each second frame ($626_0, 626_1,..,626_{M-1}, 620_1$), at each PPM alphabet modulation position and at positions obtained from the latter by means of a predetermined permutation, thus obtaining second and third energy values for each modulation position;
- means for summing ($630_0,..,630_{M-1}$), for each modulation position, the first, second and third energy values, thus obtaining a fourth energy value for each modulation position;
- means for summing ($530_0,..,530_{M-1}$), for each modulation position, the fourth energy values obtained for the different time windows, thus obtaining a fifth energy value for each modulation position;
- means for determining (540) the modulation position corresponding to the highest of said fifth energy values;
- means for determining (550), on the basis of the position thus obtained, said data symbol.

**16.** Reception module according to claim 15, **characterised in that** said predetermined permutation is a circular permutation of said PPM alphabet.

**Patentansprüche**

**1.** Kooperationsverfahren zwischen Terminals in einem gepulsten UWB-Kommunikationssystem,
**dadurch gekennzeichnet, dass** ein Quellenterminal ein Informationssymbol für ein Empfängerterminal überträgt, in Form eines Quellensignal genannten Signals, gebildet durch eine Sequenz identischer Übertragungsblöcke, wobei die genannte Sequenz einer Symbolzeit entspricht, jeder Übertragungsblock einen mittels eines PPM-Modulationsalphabets positionsmodulierten Impuls enthält, und dass ein das genannte Quellensignal empfangendes Relaisterminal eine "erste Modulationsposition" genannte Modulationsposition eines Impulses in wenigstens einem Übertragungsblock des empfangenen Signals detektiert, und ein weitergeleitetes Signal überträgt, das in wenigstens einem vorbestimmten nachfolgenden Übertragungsblock der genannten Symbolzeit einen Impuls enthält, dessen "zweite Position" genannte Position man aufgrund der ersten Position durch eine Permutation des PPM-Modulationsalphabets erhält.

**2.** Kooperationsverfahren nach Anspruch 1, **dadurch gekennzeichnet, dass** man die zweite Position durch Vergleich der in den verschiedenen Positionen des PPM-Modulationsalphabets in dem genannten Übertragungsblock des empfangenen Signals empfangenen Energien erhält.

**3.** Kooperationsverfahren nach Anspruch 1 oder 2, **dadurch gekennzeichnet, dass** der genannte nachfolgende Übertragungsblock des weitergeleiteten Signals auf den genannten Übertragungsblock des empfangenen Signals folgt.

**4.** Kooperationsverfahren nach einem der vorangehenden Ansprüche, **dadurch gekennzeichnet, dass** die genannte Permutation eine zirkulare Permutation ist.

**5.** Kooperationsverfahren nach einem der vorangehenden Ansprüche, **dadurch gekennzeichnet, dass** die Übertragungsleistungen des Quellenterminals und des Relaisterminals gewählt werden gleich $a.P$ und $b.P$, wo $P$ ein die UWB-Spektralmaske respektierender Leistungswert ist und $a$ und $b$ Koeffizienten wie $0<a<1$ und $0<b<1$ mit $a+b=1$ sind.

**6.** Kooperationsverfahren nach Anspruch 5, **dadurch gekennzeichnet, dass** die Koeffizienten $a$ und $b$ bestimmt werden in Abhängigkeit von den jeweiligen Bedingungen des Kanals zwischen dem Quellenterminal und dem Empfängerterminal und von dem Kanal zwischen dem Relaisterminal und dem Benutzterminal.

**7.** Kooperationsverfahren nach Anspruch 5, **dadurch gekennzeichnet, dass** die Koeffizienten $a$ und $b$ mittels Leistungskontrollschleifen durch zwei Retourkanäle des Empfängerterminals zu jeweils dem Quellenterminal und dem Relaisterminal kontrolliert werden.

**8.** Kooperationsverfahren nach einem der Ansprüche 1 bis 4, **dadurch gekennzeichnet, dass** die Übertragungsleistungen des Quellenterminals und des Relaisterminals gleich einem die UWB-Spektralmaske respektierenden Leistungswert gewählt werden.

**9.** Kooperationsverfahren nach einem der vorangehenden Ansprüche, **dadurch gekennzeichnet, dass** das genannte Relaisterminal durch die Quellen- und Empfängerterminals mit Hilfe der folgenden Schritte bestimmt wird:

   - Bestimmen des das Quellenterminal und das Relaisterminal trennenden Abstands;
   - Bestimmen einer ersten Menge von Terminals, die sich näher als der genannte Abstand bei dem Quellenterminal befinden;
   - Bestimmen einer zweiten Menge von Terminals, die sich näher als der genannte Abstand beim Quellenterminal befinden;
   - Selektion des Relaisterminals unter den zu der ersten und der zweiten Menge gehörenden, Kandidatenterminals genannten Terminals als dasjenige, welches die Summe der Abstände zwischen einerseits dem Quellenterminal und dem Kandidatenterminal und andererseits dem Kandidatenterminal und dem Empfängerterminal minimiert.

10. Kooperationsverfahren nach einem der Ansprüche 1 bis 8, **dadurch gekennzeichnet, dass** das genannte Relaisterminal durch die Quellen- und Empfängerterminals mit Hilfe der folgenden Schritte bestimmt wird:

- Bestimmen des das Quellenterminal und das Relaisterminal trennenden Abstands;
- Bestimmen einer ersten Menge von Terminals, die sich näher als der genannte Abstand bei dem Quellenterminal befinden;
- Selektion des Relaisterminals unter allen, Kandidatenterminals genannt Terminals der ersten und der zweiten Menge;
- Bestimmen einer zweiten Menge von Terminals, die sich näher als der genannte Abstand bei dem Quellenterminal befinden;
- Bestimmen aller, Kandidatenterminals genannten Terminals der ersten und der zweiten Menge und Senden einer Sequenz vorbestimmter Symbole zu den Kandidatenterminals, wobei das Relaisterminal als das Kandidatenterminal selektiert wird, das die genannte Sequenz mit der niedrigsten Fehlerrate detektiert.

11. Kooperationsverfahren nach einem der vorangehenden Ansprüche, **dadurch gekennzeichnet, dass** das genannte, gleichzeitig das Quellensignal und das weitergeleitete Signal empfangende Empfängerterminal:

- bei jedem Übertragungsblock einer ersten Untergruppe von Übertragungsblöcken des empfangenen Signals, das nicht einem Übertragungsblock des weitergeleiteten Signals entspricht, die in den verschiedenen Positionen des PPM-Modulationssignals empfangenen Energien misst und so für jede Modulationsposition einen ersten Energiewert erhält;
- bei jedem Übertragungsblock einer zweiten Untergruppe von Übertragungsblöcken des empfangenen Signals, von denen jeder einem Übertragungsblock des weitergeleiteten Signals entspricht, die in jeder Position des genannten Alphabets und in einer aufgrund dieser Letzteren durch die genannte Permutation erhaltenen Position empfangenen Energien misst und so für jede Modulationsposition einen zweiten und einen dritten Energiewert erhält;
- für jede Modulationsposition die genannten ersten, zweiten und dritten Energiewerte summiert und so für jede Modulationsposition einen Gesamtenergiewert erhält;
- die Gesamtenergiewerte der verschiedenen Modulationspositionen vergleicht und die dem höchsten Gesamtenergiewert entsprechende Position bestimmt;
- das genannte Informationssymbol aufgrund der so erhaltenen Position bestimmt.

12. Sende-Empfangsmodul eines Terminals für gepulste UWB-Telekommunikation, **dadurch gekennzeichnet, dass** es umfasst:

- Einrichtungen (420) um das empfange Signal in eine Vielzahl aufeinanderfolgender Zeitfenster zu zerschneiden, die den Übertragungsblöcken eines durch ein Quellenterminal gesendeten UWB-Signals entsprechen, so dass man eine Vielzahl Übertragungsblocksignale erhält;
- Einrichtungen ($425_0$, $425_1$, ..., $425_{M-1}$) um - bei wenigstens einem Übertragungsblock - die Energie des Übertragungsblocksignals in einer Vielzahl von Modulationspositionen eines vorbestimmten PPM-Alphabets zu messen;
- Einrichtungen (430) zur Detektion der Position, die der höchsten der bei dem genannten Übertragungsblock gemessenen Energien entspricht;
- Einrichtungen zur Permutation der Positionen des genannten PPM-Alphabets, um eine aufgrund der so detektierten Position permutierte Position zu erhalten;
- Einrichtungen (440, 450, 460) zu Erzeugung eines Impulses in der permutierten Position während eines dem genannten Übertragungsblock nachfolgenden Übertragungsblocks des empfangenen Signals.

13. Sende-Empfangsmodul nach Anspruch 12, **dadurch gekennzeichnet, dass** die Permutationseinrichtungen angepasst sind, eine zirkulare Permutation des genannten Alphabets durchzuführen.

14. Sende-Empfangsmodul nach Anspruch 12 oder 13, **dadurch gekennzeichnet, dass** der genannte nachfolgende Übertragungsblock des empfangenen Signals auf den genannten Übertragungsblock folgt.

15. Empfangsmodul eines Terminals für gepulste UWB-Telekommunikation, bei dem ein Informationssymbol in Form eines "Quellensignal" genannten Signals übertragen wird, gebildet durch eine Sequenz identischer Übertragungsblöcke, wobei jeder Block einen mit Hilfe eines PPM-Modulationsalphabets positionsmodulierten Impuls enthält, **dadurch gekennzeichnet, dass** es umfasst:

- Einrichtungen ($520_0$,...,$520_{nf-1}$) um das empfange Signal in eine Vielzahl aufeinanderfolgender Zeitfenster zu zerschneiden, von denen jedes zwei aufeinanderfolgenden Übertragungsblöcken des Quellensignals, erster und zweiter Übertragungsblock ($2i$,$2i+1$) genannt, entspricht;

- Einrichtungen um die Energie des empfangenen Signals zu messen ($625_0$, $625_1$,..., $625_{M-1}$, $620_0$), im Innern jedes ersten Übertragungsblocks, in jeder Modulationsposition des genannten PPM-Alphabets, so dass man einen ersten Energiewert pro Modulationsposition erhält;

- Einrichtungen um die Energie des empfangenen Signals im Innern jedes ersten Übertragungsblocks zu messen ($625_0$, $625_1$,..., $625_{M-1}$, $620_0$), in jeder Modulationsposition des genannten PPM-Alphabets und in aufgrund dieser Letzteren durch eine vorbestimmte Permutation erhaltenen Positionen, so dass man einen zweiten und einen dritten Energiewert pro Modulationsposition erhält;

- Einrichtungen ($630_0$, ..., $630_{M-1}$) um - für jede Modulationsposition - den ersten, zweiten und dritten Energiewert zu summieren und so für jede Modulationsposition einen vierten Energiewert zu erhalten;

- Einrichtungen ($530_0$, ..., $530_{M-1}$) um - für jede Modulationsposition - die für die verschiedenen Zeitfenster erhaltenen vierten Energiewerte zu summieren und so für jede Modulationsposition einen fünften Energiewert zu erhalten;

- Einrichtungen (540) zum Bestimmen der dem höchsten der genannten fünften Energiewerte entsprechenden Modulationsposition;

- Einrichtungen (550), um aufgrund der so erhaltenen Position das genannte Informationssymbol zu bestimmen.

16. Empfangsmodul nach Anspruch 15, **dadurch gekennzeichnet, dass** die genannte vorbestimmte Permutation eine zirkulare Permutation des genannten PPM-Alphabets ist.

**Fig. 1**

**Fig. 3**

$$T_s = N_f T_f$$

$T_c$

$T_f = MT_c$

$d_k = 2$

$d_k^0$

$d_k^2$

**Fig. 2A**

$\sigma\left(\hat{d}_k^0\right)$

$\sigma\left(\hat{d}_k^2\right)$

**Fig. 2B**

**Fig. 2C**

$n = 0$    $n = 1$    $n = 2$    $n = 3$

EP 1 852 980 B1

**Fig. 4**

EP 1 852 980 B1

**Fig. 5**

**Fig. 6**

## RÉFÉRENCES CITÉES DANS LA DESCRIPTION

**Littérature non-brevet citée dans la description**

- **V. TAROKH et al.** IEEE Journal on selected areas in communications. Juillet 2000, vol. 18
- **C. ABOU-RJEILY et al.** Distributed algebraic space time codes for ultra-wideband communications. Kluwer Journal
- **C. CHO et al.** A UWB repeater with a short relaying-delay for range extension. *IEEE Wireless Communications and Networking Conference,* 2004, vol. 2, 1154-1158